# EUROPÄISCHE PATENTANMELDUNG

(11) **EP 2 418 075 A2**
(43) Veröffentlichungstag der Anmeldung: **15.02.2012**
(21) Anmeldenummer: 11176508.7
(22) Anmeldetag: 04.08.2011
(51) Int. Cl.: B30B 15/30

(54) **Vorrichtung und Verfahren zur Herstellung von Pellets aus Biomasse**

(30) Priorität: 09.08.2010 DE 102010036920
(71) Anmelder: Röll, Wilhelm, 36166 Haunetal (DE); Heinz, Ullrich, 36166 Haunetal (DE)
(72) Erfinder: Röll, Wilhelm, 36166 Haunetal (DE); Heinz, Ullrich, 36166 Haunetal (DE)
(74) Vertreter: Specht, Peter

(57) **Zusammenfassung**

Vorrichtung zur Herstellung von Pellets aus Biomasse, umfassend:
a) einen Mischer (1), der mit Rohmaterial befüllbar ist,
b) eine Zerkleinerungseinrichtung (27,3) zum Zerkleinern des Rohmaterials in ein oder mehreren Schritten,
c) eine Sammeleinrichtung (8) zum Sammeln und Fördern des zerkleinerten Rohmaterials zu
d) eine Pelletieranlage (12), mittels der aus dem zerkleinerten Rohmaterial gepresste Pellets herstellbar sind,
wobei
e) eine Messeinrichtung (25) zur Erfassung des Feuchtegehalts des unzerkleinerten und / oder zerkleinerten Rohmaterials vorgesehen ist, und
f) eine Steuereinrichtung (18) abhängig von dem Feuchtgehalt eine Befeuchtungseinrichtung und eine Trocknungseinrichtung steuert.

Ferner betrifft die Erfindung ein Verfahren zur Herstellung von Pellets.

## Beschreibung

Die vorliegende Erfindung betrifft eine Vorrichtung zur Herstellung von Pellets aus Biomasse nach dem Oberbegriff des Anspruchs 1 sowie ein Verfahren hierfür.

Es sind Vorrichtungen zur Herstellung von Pellets aus Biomasse bekannt, die Pellets als Tiereinstreu, zur Tierfütterung oder als Brennstoff herstellen. Das Ausgangsmaterial wird zerkleinert, bevor es pelletiert werden kann. Für die Qualität der Pellets ist sowohl die Beschaffenheit des Ausgangsmaterials, als auch der Verpressungsvorgang entscheidend. Gerade bei halmgutartiger Biomasse können Probleme durch Feuchtigkeit auftreten. Auch nach dem Pelletieren kann ein schnelles Abkühlen die Festigkeit der Pellets negativ beeinflussen.

Es ist daher Aufgabe der vorliegenden Erfindung eine Vorrichtung und ein Verfahren zur Herstellung von Pellets aus Biomasse zu schaffen, die auch bei unterschiedlichen Ausgangsmaterialien eine hohe Qualität der Pellets gewährleistet.

Diese Aufgabe wird mit einer Vorrichtung mit den Merkmalen des Anspruchs 1, sowie einem Verfahren mit dem Merkmal des Anspruchs 15 gelöst.

Die erfindungsgemäße Vorrichtung umfasst einen Mischer, der mit Rohmaterial befüllbar ist, eine Zerkleinerungseinrichtung zum Zerkleinern des Rohmaterials in ein oder mehreren Schritten, eine Sammeleinrichtung zum Sammeln und Fördern des zerkleinerten Rohmaterials zu einer Pelletieranlage, aus der aus den zerkleinerten Rohmaterial gepresste Pellets herstellbar sind. Dabei ist eine Messeinrichtung zur Erfassung des Feuchtegehalts des unzerkleinerten und /oder zerkleinerten Rohmaterials vorgesehen, uns eine Steuereinrichtung, die anhängig von dem Feuchtegehalt eine Befeuchtungseinrichtung und eine Trocknungseinrichtung steuert. Dadurch kann der Feuchtegehalt des zu pelletierenden Materials vor dem Pelletieren exakt eingestellt werden, was die Qualität des Pelletiervorganges erhöht. Es kann auch zu feuchtes oder zu trockenes Rohmaterial eingesetzt werden, dass dann durch die Vorrichtung zur Herstellung von Pellets vor dem Pelletieren auf den notwendigen Feuchtegehalt gebracht wird. Abhängig vom Rohmaterial kann auch ein unterschiedlicher Feuchtegehalt für die Pelletierung eingestellt werden.

Vorzugsweise umfasst die Messeinrichtung zur Erfassung des Feuchtegehalts einen Sensor im oder am Mischer. Dadurch kann der Feuchtegehalt des in dem Mischer eingegebenen Rohmaterials erfasst werden, also schon zu Beginn des Aufarbeitungsprozesses für das Rohmaterial, so dass frühzeitig durch die Befeuchtungseinrichtung oder Trocknungseinrichtung auf die Einhaltung eines vorbestimmten Feuchtegehalts eingewirkt werden kann. Vorzugsweise umfasst die Trocknungseinrichtung ein Gebläse zum Einblasen von erwärmter Luft oder eines erwärmten Luftgemisches in den Mischer mit dem Rohmaterial. Der Mischer besitzt ein großes Aufnahmevolumen, so dass das Rohmaterial nur langsam durch den Mischer gefördert wird. In diesem Stadium kann durch das Einblasen von erwärmter Luft oder eines erwärmten Luftgemischs auf einfach Weise eine Trocknung erfolgen, die eine Weiterverarbeitung des Rohmaterials erleichtert.

Der Mischer umfasst vorzugsweise ein drehbares Rührwerk. Dadurch kann eine gute Durchmischung des in dem Mischer eingegebenen Rohmaterials gewährleistet werden. Das Rührwerk kann dabei eine Hohlwelle umfassen, durch die die erwärmte Luft oder das erwärmte Luftgemisch eingeblasen wird.

Dadurch kann ein großes Volumen von Rohmaterial im Mischer getrocknet werden, das durch das Rührwerk gleichzeitig bewegt wird. Die erwärmte Luft oder das erwärmte Luftgemisch kann dann durch den nach oben offenen Mischer nach Trocknung des Rohmaterials entweichen.

Vorzugsweise erfolgt die Zerkleinerung des Rohmaterials in mehreren Schritten. Im Bodenbereich des Mischers ist eine Schneideinrichtung zum Zerkleinern des Rohmaterials angeordnet. Dadurch kann auf einfache Weise auch Halmgut verarbeitet werden. Aus dem Mischer kann dann das etwas zerkleinerte Rohmaterial durch eine verstellbare Öffnung weiter gefördert werden, wobei durch die Verstellmöglichkeit an der Öffnung eine Dosierung möglich ist.

Gemäß einer bevorzugten Ausgestaltung ist hinter dem Mischer ein Metallabscheider und / oder ein Mineralabscheider vorgesehen. Metallische oder mineralische Verunreinigungen können die Zerkleinerungsmühlen und andere Einrichtungen beschädigen, so dass eine Abtrennung dieser Verunreinigungen sich positiv auf die Lebensdauer und den Verschleiß der Anlage auswirkt.

Vorzugsweise umfasst die Zerkleinerungseinrichtung eine Hammermühle, so dass auch große Volumenströme von Rohmaterialien zerkleinert werden können. Das von der Zerkleinerungseinrichtung zerkleinerte Material kann dann über einen Zyklon oder einen Luftstromgebläse zu einer Sammeleinrichtung gefördert werden.

Vorzugsweise ist an der Sammeleinrichtung die Befeuchtungseinrichtung zur Erhöhung des Feuchtegehalts des zerkleinerten Materials vorgesehen. An der Sammeleinrichtung kann zudem auch noch einmal der Feuchtegehalt des zerkleinerten Materials gemessen werden, so dass eine exakte Einstellung des Feuchtegehalts vor dem Pelletieren möglich ist.

Für einen energetisch optimierten Betrieb der Vorrichtung kann das Rührwerk und / oder die Zerkleinerungseinrichtung über einen Motor angetrieben sein, dessen Abwärme auch zur Erwärmung der Luft oder des Luftgemischs der Trocknungseinrichtung eingesetzt wird. Dadurch kann die Vorrichtung auch mobil aufgestellt sein, so dass die einzelnen Anlagenteile sich in kurzer Zeit demontieren und an einen anderen Ort aufbauen lassen. Die Anlagenteile können dabei in einen oder mehreren Standardcontainern untergebracht sein. Dies ermöglicht die Pelletierung von Biomasse direkt am Erzeugungsort, so dass die Transportwege optimiert werden. Auch eine stationäre Aufstellung der Vorrichtung ist natürlich möglich.

Gemäß einer weiteren Ausgestaltung der Erfindung ist hinter der Pelletieranlage eine schlauchförmige Fördereinrichtung vorgesehen, mit der die Pellets gefördert werden, wobei die Pellets über einen Kühlgebläsestrom gekühlt werden. Das langsame Abkühlen der Pellets über eine schlauchförmige Fördereinrichtung mit einem Kühlgebläsestrom kann den Pellets eine höhere Festigkeit geben, da ein schnelles Abkühlen die Festigkeit negativ beeinflusst.

Bei dem erfindungsgemäßen Verfahren wird der Feuchtegehalt und / oder zerkleinerten Rohmaterials erfasst und abhängig vom Feuchtegehalt des Rohmaterials befeuchtet oder getrocknet. Der Feuchtegehalt wird vorzugsweise so gesteuert, dass das zerkleinerte Rohmaterial vor dem Pelletieren einen Feuchtegehalt zwischen 12% bis 18%, insbesondere 14% bis 16% aufweisen. Die exakte Einstellung des Feuchtegehalts ermöglicht die Herstellung von qualitativ hochwertigen Pellets. Die Pellets können dabei sowohl als Futtermittel, Tiereinstreu oder Brennstoff eingesetzt werden. Das Erfassen des Feuchtegehalts des Rohmaterials erfolgt über geeignete Sensoren, wobei das Trocknen durch das Einblasen von erwärmter Luft oder einem erwärmten Luftgemisch folgt.

Gemäß einer weiteren Ausgestaltung des Verfahrens wird in dem Mischer neben dem Feuchtegehalt auch die Temperatur erfasst, wobei bei Überschreiten einer vorbestimmten Temperatur das Einblasen von erwärmter Luft oder dem erwärmten Luftgemisch reduziert oder eingestellt wird. Dadurch wird verhindert, dass bei zu hohen Temperaturen eine Gefährdung von Verpuffung oder einem Brand entsteht. Gerade das getrocknete Rohmaterial könnte sich ansonsten entzünden.

Die Erfindung wird nachfolgend anhand eines Ausführungsbeispieles mit Bezug auf die beigefügten Zeichnungen näher erläutern. Es zeigen:
- Figur 1: eine schematische Ansicht einer erfindungsgemäßen Vorrichtung zur Herstellung von Pellets aus Biomasse;
- Figur 2: eine Detailansicht des Mischers der Vorrichtung der Figur 1;
- Figur 3: eine Detailansicht der Sammeleinrichtung der Figur 1;
- Figur 4: eine Ansicht der Antriebseinrichtung der Vorrichtung der Figur 1, und
- Figur 5 A und B: zwei Ansichten von Abfüllanlagen für Pellets.

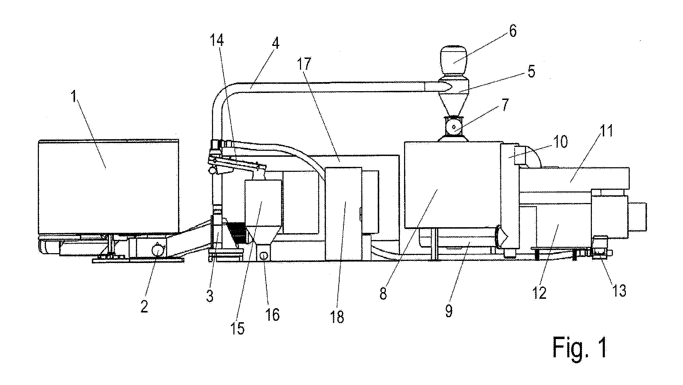

Figur 1 zeigt eine Vorrichtung zur Herstellung von Pellets aus Biomasse, die einen nach oben offenen Mischer 1 umfasst, der mit unzerkleinerten Rohmaterial befüllt werden kann.

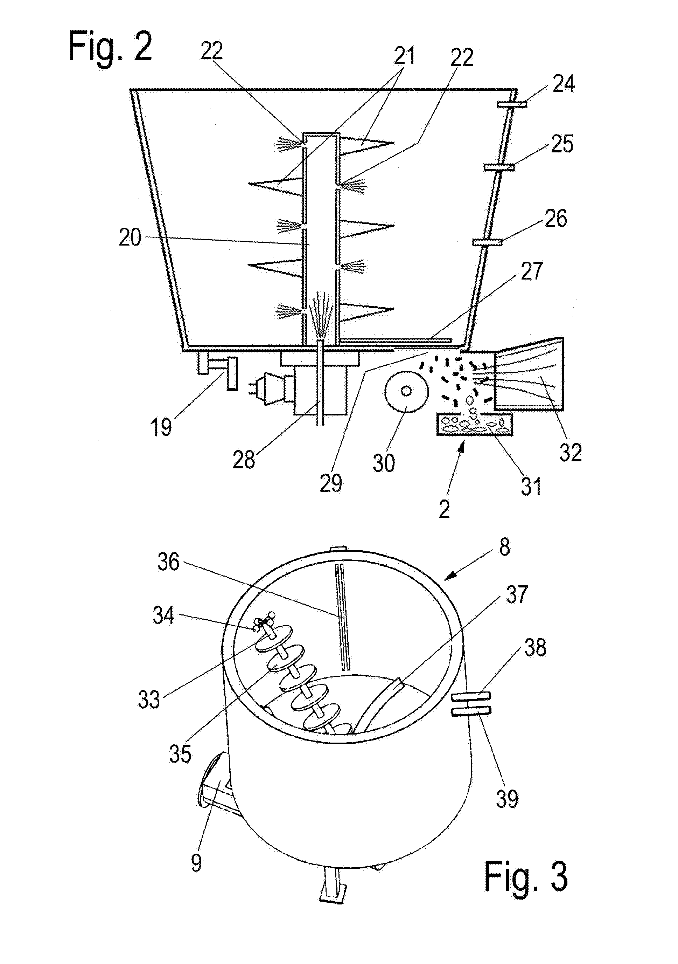

Der in Figur 2 gezeigte Mischer 1 umfasst eine vom Boden sich nach oben streckende Hohlwelle 20, an der ein Rührwerk mit radial hervorstehenden Flügeln 21 ausgebildet ist. Das Rührwerk kann das im topfförmigen Mischer 1 enthaltene Rohmaterial durchmischen, wobei das Rührwerk mit etwa 20 Umdrehungen pro Minute ein langsames Bewegen des Rohmaterials erzwingt.

An der Hohlwelle 20 sind ferner eine Vielzahl von Düsen 22 vorgesehen, mittels denen heiße Luft oder ein heißes Luftgemisch in das unzerkleinerte Rohmaterial eingeblasen wird, um dieses zu trocknen.

An dem Mischer 1 ist ein Sensor 24 zur Erfassung des Füllstandes vorgesehen, der einer Steuerung signalisiert, wenn der Mischer 1 befüllt ist. Ferner ist ein Sensor 25 zur Erfassung der Feuchtigkeit des Rohmaterials vorgesehen. Über den Umfang und / oder die Höhe verteilt, können mehrere Sensoren 25 zur Erfassung der Feuchtigkeit vorgesehen sein.

Ferner ist an dem Mischer 1 mindestens ein Sensor 26 zur Erfassung der Temperatur des Rohmaterials vorgesehen. Bei Überschreiten einer vorbestimmten Temperatur kann die Zuführung von heißer Luft bzw. heißem Luftgemisch verringert oder angehalten werden, um eine Gefährdung durch Brand oder Verpuffung zu vermeiden.

Im unteren Bereich des Mischers 1 ist ein rotierendes Schneidmesser 27 vorgesehen, dass zusammen mit einem Gegenstück für eine gewisse Zerkleinerung des Rohmaterials sorgt. Das vorzerkleinerte Rohmaterial fällt durch eine Öffnung 29 am Boden des Mischers 1, wobei die Größe der Öffnung 29 verstellt werden kann, so dass eine Dosierung des geförderten Stroms an Rohmaterial möglich ist.

Unterhalb des Mischers 1 ist ein Gebläse 28 zum Einblasen der erwärmten Luft oder des Luftgemisches vorgesehen, wobei das Anwärmen des Gases durch die Abwärme eines Motors zum Antrieb des Rührwerks erfolgen kann, um die Vorrichtung energetisch zu optimieren.

Unterhalb des Mischers ist ferner eine Abscheideeinrichtung 2 vorgesehen, die einen Metallabscheider 30 in Form einer magnetischen Rolle umfasst. Ein weiterer mineralischer Abscheider 31 ist als Falle ausgebildet und nutzt das höhere Gewicht der mineralischen Stoffe aus, die herabfallen, während das vorzerkleinerte Rohmaterial durch einen Ansaugkanal 32 gefördert wird.

Wie in der Gesamtansicht der Figur 1 zu sehen ist, wird das von der Abscheideeinrichtung 2 kommende vorzerkleinerte Material zu einer Hammermühle 3 gefördert, die das Rohmaterial auf Häckselgröße zerkleinert, beispielsweise mit einer Schnittlänge zwischen 6mm und 15mm. Von der Hammermühle 3 wird das zerkleinerte Material über ein Rohr 4 über einen von der Hammermühle 3 erzeugten Luftstrom zu einer Extraktionseinrichtung 5 in Form eines Zyklons gefördert. Die Extraktionseinrichtung 5 umfasst einen Sack 6, durch den die überflüssige Transportluft ausströmen kann. Das Schüttgut wird gesammelt und fällt zu einer Zellenradschleuse 7, die oberhalb einer Sammeleinrichtung 8 angeordnet ist. In der Sammeleinrichtung 8 wird das zerkleinerte Rohmaterial gesammelt und aufbereitet.

Die Sammeleinrichtung 8 ist in Figur 3 im Detail dargestellt. In einem topfförmigen Behälter ist eine schräg gestellte drehbare Welle 33 angeordnet, die an ihrem oberen Ende mit Klopfelementen 34 an einer Seitenwand des Behälters anliegt. An der Welle 33 sind schneckenförmige Vorsprünge 35 (Band- oder Ringwendel) zum Durchmischen des zerkleinerten Rohmaterials vorgesehen. Durch dir Klopfelemente 34 kann anhaftendes Material von den Seitenwänden des Behälters entfernt werden.

An dem Behälter der Sammeleinrichtung 8 ist ein Füllstandsmesser 36 vorgesehen, damit über eine Steuerung der Füllstand mittels einer Verstellung des Austragsquerschnittes der Öffnung 29 an dem Mischer 1 auf einem vorbestimmten Niveau gehalten werden kann. Im Bodenbereich der Sammeleinrichtung 8 ist eine Austragseinrichtung 20 mit Paddeln vorgesehen, die das zerkleinerte Rohmaterial zu einer Fördereinrichtung 9 in Form einer horizontalen Schnecke weiterleitet.

Die Sammeleinrichtung 8 umfasst ferner einen Sensor 38 zur Messung der Feuchtigkeit und einen Sensor 39 zur Messung der Temperatur. Wenn das zerkleinerte Rohmaterial eine zu geringe Feuchte besitzt, kann über nicht dargestellte Düsen Wasser oder Wasserdampf zugeführt werden, um dem Feuchtegehalt auf das gewünschte Niveau einzustellen.

Von der Sammeleinrichtung 8 gelangt das zerkleinerte Rohmaterial über eine Fördereinrichtung in Form einer horizontalen Schnecke 9 und eine sich anschließende Vertikalschnecke 10 zu einer Presse 11. Dort kann je nach Ausgangsfeuchte Wasser in flüssiger oder gasförmiger Form hinzugefügt werden.

Nach der Aufbereitung des Rohmaterials wird dieses in einer Pelletspresse 12 zugeführt, wo das aufbereitete Rohmaterial unter hohem Druck zu Pellets gepresst wird.

Die so hergestellten Pellets werden über einen spiralförmigen Spiralförderer 13 zu einer Einrichtung zur Staubextraktion 14 gefördert. Im Spiralförderer werden die Pellets langsam abgekühlt. Dadurch wird die Festigkeit der Pellets nicht nachteilig beeinflusst. Nach der Einrichtung zur Staubextraktion fallen die Pellets in einen Vorratsbehälter 15, von dem sie über einen Austragt 16 gefördert werden können.

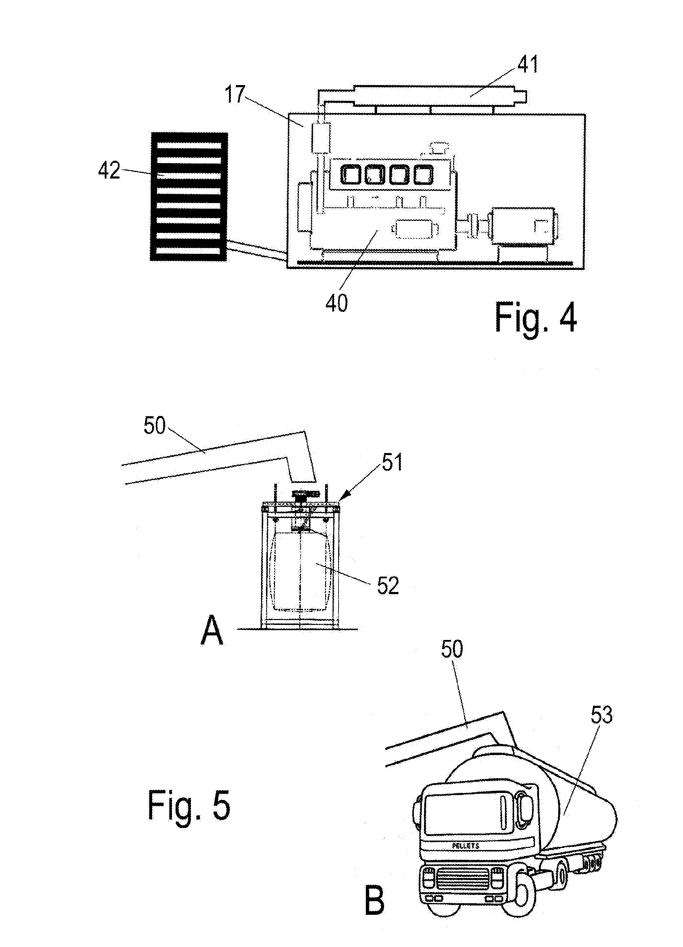

In Figur 5A ist beispielhaft eine Abfüllanlage 51 dargestellt, bei der die Pellets von dem Austragt 16 über einen Rohrförderer 50 zu der Abfüllanlage 51 gefördert werden und dort in Behältnisse, wie Säcke 52, eingefüllt werden.

Alternativ ist es entsprechend Figur 5B möglich, die Pellets über den Förderschlauch 50 direkt in ein Fahrzeug mit einem Behälter 53 für Pellets einzufüllen.

Die Pellets können die eingesetzte Biomasse zu Tiereinstreu, Brennmaterial oder Futtermittel veredeln.

In Figur 4 ist die Antriebseinrichtung 17 der Vorrichtung zur Herstellung von Pellets schematisch dargestellt. Die Antriebseinrichtung 17 umfasst ein Dieselaggregat 40, das zusammen mit den anderen Anlagenteilen der Vorrichtung in einem transportablen Container angeordnet ist und einen Plattenwärmetauscher 42 und einen Abgaswärmetauscher 41 betreibt. Die entstehende Abwärme kann zur Erwärmung von Umgebungsluft eingesetzt werden, die dann in den Mischer 1 zur Trocknung des Rohmaterials eingeblasen wird. Auch eine anderweitige Nutzung der Abwärme, beispielsweise zum Aufheizen von Hallen und Häusern ist möglich.

Beim Betrieb der Vorrichtungen werden die Daten der Sensoren 24, 25 und 26 an eine Zentrale Steuereinrichtung 18 geleitet. Ferner wird über eine Wiegeeinrichtung 19 auch das Gewicht des Mischers 1 mit dem dort enthaltenden Rohmaterial erfasst. Die gesammelten Daten werden zusammen mit den Daten der Sensoren 36, 38 und 39 der Sammeleinrichtung 8 verwendet, um dafür zu sorgen, dass der Feuchtegehalt des zerkleinerten Rohmaterials vor dem Pelletieren in einem Bereich zwischen 14% und 16% liegt. Dadurch wird gerade bei der Aufbereitung von Halmgut ein optimiertes Ergebnis für die Pellets erreicht. Es kann mit der Vorrichtung auch andere Biomasse verarbeitete werden, beispielsweise Holz, Holzspänne oder Miscanthos.

Neben der Einstellung des Feuchtigkeitsgehalts übernimmt die Steuereinrichtung auch eine Sicherheitsfunktion, die ein Reduzieren oder Abschalten der Heizeinrichtung übernimmt, wenn eine vorbestimmte Temperatur erreicht wird. Gerade im Mischer 1 kann es ansonsten zu ungewünschten Verpuffungen kommen.

Die Vorrichtung zur Herstellung von Biopellets kann transportabel ausgebildet sein, so dass der Betreiber die Vorrichtung in vorbestimmten Intervallen an unterschiedlichen Orten aufstellen kann. Dadurch können Transportwege optimiert werden, um das Heranführen von Biomasse zu erleichtern. Auch eine stationäre Aufstellung der Vorrichtung ist natürlich möglich. Dann kann die Vorrichtung auch zum Beheizen von weiteren Bauwerken genutzt werden.

## Patentansprüche

1. Vorrichtung zur Herstellung von Pellets aus Biomasse, umfassend:
a) einen Mischer (1 ), der mit Rohmaterial befüllbar ist,
b) eine Zerkleinerungseinrichtung (27,3) zum Zerkleinern des Rohmaterials in ein oder mehreren Schritten,
c) eine Sammeleinrichtung (8) zum Sammeln und Fördern des zerkleinerten Rohmaterials zu
d) einer Pelletieranlage (12), mittels der aus dem zerkleinerten Rohmaterial gepresste Pellets herstellbar sind, **dadurch gekennzeichnet, dass**
e) eine Messeinrichtung (25) zur Erfassung des Feuchtegehalts des unzerkleinerten und / oder zerkleinerten Rohmaterials vorgesehen ist, und
f) eine Steuereinrichtung (18) abhängig von dem Feuchtegehalt eine Befeuchtungseinrichtung und eine Trocknungseinrichtung steuert.

2. Vorrichtung nach Anspruch 1, **dadurch gekennzeichnet, dass** die Messeinrichtung (25) zur Erfassung des Feuchtegehalts einen Sensor im oder am Mischer (1) umfasst.

3. Vorrichtung nach Anspruch 1 oder 2, **dadurch gekennzeichnet, dass** die Trocknungseinrichtung ein Gebläse (28) zum Einblasen von erwärmter Luft oder eines erwärmten Luftgemisches in den Mischer (1) mit dem Rohmaterial umfasst.

4. Vorrichtung nach einem der Ansprüche 1 bis 3, **dadurch gekennzeichnet, dass** in den Mischern (1) ein drehbares Rührwerk (21) angeordnet ist.

5. Vorrichtung nach Anspruch 4, **dadurch gekennzeichnet, dass** das Rührwerk eine Hohlwelle (20) umfasst, durch die die erwärmte Luft oder das Luftgemisch in das Rohmaterial eingeblasen wird.

6. Vorrichtung nach einem der vorhergehenden Ansprüche, **dadurch gekennzeichnet, dass** im Bodenbereich des Mischers (1) eine Schneideinrichtung (27) zum Zerkleinern des Rohmaterials angeordnet ist.

7. Vorrichtung nach einem der vorhergehenden Ansprüche, **dadurch gekennzeichnet, dass** der Mischer (1) bodenseitig einen in der Größe verstellbare Öffnung (29) aufweist.

8. Vorrichtung nach einem der vorhergehenden Ansprüche, **dadurch gekennzeichnet, dass** hinter dem Mischer (1) ein Metalabschneider (30) vorgesehen ist.

9. Vorrichtung nach einem der vorhergehenden Ansprüche, **dadurch gekennzeichnet, dass** hinter dem Mischer (1) ein Mineralabscheider (31) vorgesehen ist.

10. Vorrichtung nach einem der vorhergehenden Ansprüche, **dadurch gekennzeichnet, dass** die Zerkleinerungseinrichtung eine Hammermühle (3) umfasst.

11. Vorrichtung nach einem der vorhergehenden Ansprüche, **dadurch gekennzeichnet, dass** von der Zerkleinerungseinrichtung zerkleinertes Material über einen Zyklon (5) zu der Sammeleinrichtung (8) gefördert wird.

12. Vorrichtung nach einem der vorhergehenden Ansprüche, **dadurch gekennzeichnet, dass** eine Sammeleinrichtung (8) die Befeuchtungseinrichtung zur Erhöhung des Feuchtegehalts des zerkleinerten Materials vorgesehen ist.

13. Vorrichtung nach einem der vorhergehenden Ansprüche, **dadurch gekennzeichnet, dass** das Rührwerk (21) und die Zerkleinerungseinrichtung (3) über einen Motor (17) angetrieben sind, dessen Abwärme zur Erwärmung der Luft oder des Luftgemisches der Trocknungseinrichtung eingesetzt wird.

14. Vorrichtung nach einem der vorhergehenden Ansprüche, **dadurch gekennzeichnet, dass** hinter der Pelletieranlage (12) die Pellets über eine schlauchförmige Fördereinrichtung (13) bewegt werden, in der ein Kühlgebläsestrom durchgeleitet ist.

15. Verfahren zur Herstellung von Pellets aus Biomasse, mit den folgenden Schritten:
a) Mischen von Rohmaterial in einem Mischer (1),
b) Zerkleinern des gemischten Rohmaterials,
c) Sammeln des zerkleinerten Rohmaterials,
d) Pelletieren des zerkleinerten Rohmaterials zu verpressten Pellets,
**dadurch gekennzeichnet, dass**
der Feuchtegehalt des unzerkleinerten und / oder zerkleinerten Rohmaterials erfasst wird und abhängig vom Feuchtegehalt des Rohmaterials befeuchtet oder getrocknet wird.

16. Verfahren nach Anspruch 15, **dadurch gekennzeichnet, dass** der Feuchtegehalt so gesteuert wird, dass das zerkleinerte Rohmaterial vor dem Pelletieren einen Feuchtegehalt zwischen 12% und 18%, insbesondere 14% bis 16% aufweist.

17. Verfahren nach Anspruch 15 oder 16, **dadurch gekennzeichnet, dass** das Trocknen durch Einblasen von erwärmter Luft oder eines erwärmten Luftgemisches im Mischer (1 ) befindliche Rohmaterial erfolgt.

18. Verfahren nach einem der Ansprüche 15 bis 17, **dadurch gekennzeichnet, dass** in dem Mischer (1) auch die Temperatur erfasst wird und bei Überschreiten einer vorbestimmten Temperatur das Einblasen von erwärmter Luft oder dem erwärmten Luftgemisch reduziert oder abgestellt wird.
